# EUROPEAN PATENT APPLICATION

(11) **EP 1 415 581 A2**
(43) Date of publication of application: **06.05.2004**
(21) Application number: 03380255.4
(22) Date of filing: 03.11.2003
(51) Int. Cl.: A47J 37/07

(54) **Kitchen utensil and corresponding uses**

(30) Priority: 04.11.2002 ES 200202518
(71) Applicant: Moli Campderrich, Armando, 08480 L'Ametlla del Valles (ES); Martinell Jou, Josep Maria, 08173 Sant Cugat del Valles (Barcelona) (ES)
(72) Inventor: Moli Campderrich, Armando, 08480 L'Ametlla del Valles (ES); Martinell Jou, Josep Maria, 08173 Sant Cugat del Valles (Barcelona) (ES)
(74) Representative: Curell Aguilà, Marcelino

(57) **Abstract**

Kitchen utensil and corresponding uses. The invention relates to a kitchen utensil for direct cooking of foods such as meats, fish or seafood, which has at least one handle (2) and is suitable for being placed on any heat source. Said utensil comprises a porous cooking plate (1) of natural stone or of ceramic material, such that cooking has advantageous dietetic qualities. Said plate (1) has a totally flat lower surface, suitable for being placed, for example, on an electric or vitroceramic hotplate, and is removably joined to a handle (2), preferably by means of magnets (4a, 4b) such that the decoupling manoeuvre is facilitated. Preferably, said cooking plate (1) is used to manufacture a kitchen utensil according to the invention, and said utensil is used for direct cooking of foods.

## Description

### Field of the invention

The invention relates to a kitchen utensil for direct cooking of foods such as meat, fish, seafood and/or vegetables, which has at least one handle and is suitable for being placed on any heat source, and its corresponding uses. More specifically, the field of application of said cooking utensil is that of the technique of cooking on stone.

### State of the art

A cooking technique which is very well known and appreciated for its dietetic properties consists in the cooking of fresh foods such as meats, fish or seafood, through the direct action of heat, i.e. without the intervention in the cooking process of other elements or ingredients such as water, oils, sauces, etc.

In frying, i.e. cooking by means of a substantially flat hot contact surface, the fats given off by the foodstuffs themselves in the cooking process remain on the cooking surface and intervene in the cooking, the cooked dish can thus be overly fatty or contain remnants of burnt fat, which is bad for the health.

In grilling, e.g. on a barbecue, this drawback does not exist, since the fats are eliminated by falling through the openings in the grill. However, there is the drawback that, since the fats fall on the heat source below, they are burnt, emitting harmful fumes and possibly igniting, with the consequent risk of fire, prejudicing suitable food cooking.

Cooking on stone traditionally uses a smooth stone tile placed on a bed of coals. This technique essentially shares the same drawbacks as already cited for frying. Another drawback of this traditional practice is that the tile, once heated, is difficult to handle and such remains true for a long period of time due to the stone's high calorific properties.

Portable stone roasters are known, e.g. from the European patent EP 0 623 303, which principally comprise a frame, some gripping elements, an electric heat source and a flat smooth stone plate removably housed in said frame over the heat source. These known roasters have the advantage of still being portable even when the stone is heated. However their aesthetic effect is not as pleasing as traditionally; it is understood, in any case, that they do not share the same aesthetic characteristics, both as refers to their general aspect and operation, since they require an electric connection. In effect, a portable roaster of the type cited above forms an indissociable ensemble, in the sense that its constitutive elements, and in particular the smooth stone plate, cannot be adapted to other supports or other heat sources, such as for example a bed of coals.

### Summary of the invention

The objective of the present invention is to overcome these drawbacks. This aim is achieved by means of a kitchen utensil for direct cooking of foods such as meat, fish, seafood and/or vegetables, which has at least one handle, characterised in that it has a porous cooking plate and in that it is suitable for being placed on any heat source, in which said porous cooking plate has pores that allow the absorption of liquids but prevent the passage of flames.

Thus, the kitchen utensil according to the present invention has the pleasing aesthetic appearance of the traditional practice of cooking on a smooth stone, but resolves the cited drawbacks, in having a handle which allows easy operation, even when hot, in being able to be used on various supports and in having dietetic advantages resulting from the porous character of the stone, the foodstuffs remaining separated from the heat source but fats not being retained on the cooking surface, being absorbed by the stone thanks to its porous nature.

Preferably, said porous cooking plate has a foam structure which retains liquids, and especially fats, exuded by foods such as meats, fish, seafood and/or vegetables during cooking, such that the cooking mode has the result of being advantageous with respect to that of traditional cooking on smooth stone. Such a foam structure can particularly be found in some natural stones, such as for example certain types of slate, but can also be obtained in a synthetic material. In this description and claims, synthetic material should be understood to be any material which is not directly obtainable naturally, unlike for instance a natural slate-like stone which is directly obtainable naturally. In particular synthetic material should be understood to encompass agglomerates of natural stones, ceramic materials and/or heat-resistant materials and mixtures of the same, as well as any other type of material as long as it is resistant to the temperatures usually employed in the cooking of food, and is suitable for food usage.

Advantageously, the lower surface of said porous cooking plate is completely flat. In this manner, this surface can be applied to any type of support or heat source, i.e. not only on a barbecue grill or stove using gas or other fuel but also and especially on supports that require a totally flat contact surface, such as for example electric hotplates or also vitroceramic cooking plates. Additionally, the flatness of the lower surface eases cleaning whilst further giving the plate an aesthetically advantageous aspect.

Preferably, said cooking plate is of a stone-like material or natural stone, and advantageously is of natural permeable slate. Such as composition gives the utensil according to the invention a pleasing aspect, with an aesthetic similar to that of traditional smooth stone cooking.

However, said cooking plate can also be made from a synthetic material, such as a ceramic material and/or heat-resistant material or natural stone agglomerate. Thus, a synthetic material with an aspect similar to that of natural stone can be sought and whose intrinsic properties have been optimised for use as a cooking surface.

In a preferred form of the invention, the handle is joined to said cooking plate removably, by means of any known fixation system. Thus, in one respect, cleaning of the members which compose the utensil according to the invention is facilitated, and, in another respect, cooking plate replacement is made possible when it is saturated or has deteriorated with use. In addition, once the constitutive parts of the utensil according to the invention have been disassembled, i.e. principally the cooking plate and the handle, they can be tidied away more easily. Finally, the removable nature of said handle allows coupling of several cooking plates, e.g. of different shapes and sizes, to one and the same handle, with the consecutive advantages of reduced cost and greater compactness of the disassembled whole.

More preferably, said handle is joined with said cooking plate by at least one magnet, such that the fixation system is far simplified by not comprising screws, washers, screw nuts or similar members. In this manner, assembly/disassembly operations do not require the use of tools and in addition cleaning is facilitated.

More preferably still, said handle has a bearing surface with at least two magnets aligned with respect to each other, defining a line of magnetisation, and said handle has a haft which is joined to said bearing surface at a point distanced from said line of magnetisation. This preferential embodiment allows easy uncoupling of the handle from the cooking plate through a simple lever movement by means of said haft.

Advantageously, said magnet or magnets are housed in the interior of said handle through the lower surface of said handle which enters in contact with said cooking plate, such that said magnets act directly in said lower surface, i.e. without the presence of any intermediary material.

Likewise, said magnet or magnets can also be housed in the interior of said cooking plate through the lower surface of such, such that they act through the upper surface of said cooking plate, or cooking surface, through a thickness of said cooking plate. In this manner, said magnet or magnets are hidden, leaving said cooking surface flat and homogenous, which considerably facilitates cleaning. In addition, the flat and homogenous character of the cooking surface bestows it with an aesthetically advantageous look. Said cooking plate can thus be used, disassembled from the handle, for other uses apart from cooking, for example as presentation tray for foods such as cheese, delicatessen products or others.

In this advantageous embodiment, in which the members for joining said cooking plate with said haft are constituted by at least one magnet, the position, form and intrinsic characteristics of said magnets are such that they ensure an efficient join between said handle and said cooking plate, without lessening the robustness of said cooking plate where said magnets are housed. The variant in which said magnets are present both in the cooking plate as well as in the handle is preferred for providing the most effective join. Obviously, in other variants in which said magnets are only present in one of the two members, cooking plate or handle, the other member will instead have a ferromagnetic material such that the join by the action of a magnetic force is ensured.

Alternatively, the porous cooking plate has at least one grip and preferably two grips made from the very material of the porous cooking plate and which form a single piece with said porous cooking plate. In this manner a kitchen utensil is obtained with a smooth finish, easy to clean, and very cheap.

Preferably the porous cooking plate has a porosity of between 10% and 30% in volume, and more preferably between 20 and 25% in volume. In fact, porosity cannot be any value whatsoever. On one hand, an excessively low porosity is not sufficient to absorb liquids and cooking will be similar to cooking on a frying surface, in addition the liquids absorbed can only be eliminated subsequently with difficulty. On the other hand, excessively high porosity likewise has several drawbacks: the liquids absorbed pass through the plate and fall on the heat source (for example electric cookers, gas, or vitroceramic hotplates), and the high porosity can allow the direct passage of combustion gases, at a high temperature. This means that cooking resembles grilling. Furthermore, an excessively high porosity weakens the plate, this being a particularly important factor in the case of plates of ceramic origin.

Preferably the porous cooking plate is formed from a granulated material having the following grading:
- grains having a size less than 50 microns: between 40% and 50% in weight,
- grains having a size of between 50 and 150 microns: between 10% and 20% in weight,
- grains having a size of between 150 and 1000 microns: between 20% and 30% in weight,
- grains having a size of between 1 and 3 mm: between 10% and 20% in weight.

In fact, the nature of the porosity is likewise important. Two plates having equal porosity as an absolute value, but the geometry of which is different, will likewise behave differently. A parameter which has a significant influence in porosity is the grading of the powder or granulate which are used in forming the plate. In this regard, grading comprised between the values indicated has proved to be particularly advantageous.

Advantageously, the porous cooking plate is formed by more than 50% in weight of silicocarbide (CSi), and preferably by more than 90% in weight of silicocarbide. It should be taken into account that, when using ceramic or similar materials, the cooking plate will be highly insulant, and this will be accentuated by the porosity. In this respect then it is particularly advantageous that a material be used that has high thermal conductivity, preferably equal to or higher than 10 Kcal/m²·m·hr·°C, measured at 400°C, such as for example silicocarbide (CSi), which is a ceramic material having thermal conductivity of 12 Kcal/m²·m·hr·°C, measured at 400°C.

The invention also relates to a use of a porous cooking plate for direct cooking of foods such as meats, fish, seafood and/or vegetables such as described above.

Likewise, the invention refers to a use of a porous cooking plate for the manufacture of a kitchen utensil with a handle such as described above.

### Brief description of the drawings

Other advantages and characteristics of the invention become apparent from the following description, in which, without that such be construed as a limitation of the scope of the invention, some preferential embodiments of the invention are given, with reference to the accompanying drawings, in which:
Figure 1, is a perspective view of a kitchen utensil according to a first embodiment of the present invention;
Figure 2, is an exploded perspective view of the kitchen utensil of figure 1;
Figure 3, is a plan view from above of the handle belonging to the kitchen utensil of figure 1;
Figure 4, is a front elevation view of said handle, together with a partial front elevation view of a corresponding cooking plate;
Figure 5, is a side elevation view of said handle;
Figure 6, is a front elevation view of a handle, together with a partial front elevation view of a corresponding cooking plate, according to a second embodiment of the invention; and
Figure 7, is a view in perspective of a third embodiment of the invention.

### Detailed description of some embodiments of the invention

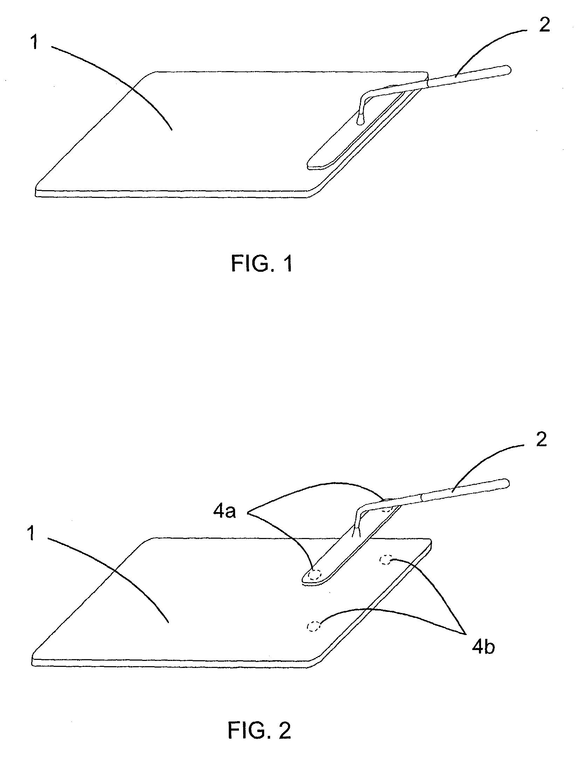

Figures 1 to 5 illustrate a first preferable embodiment of the kitchen utensil according to the invention, in which:
- the handle is removably joined to the cooking plate by means of two pairs of magnets,
- said handle has a bearing surface with two magnets housed in its interior through its lower surface,
- said handle has a haft joined to said bearing surface at a point distanced from the line that passes through said magnets,
- said cooking surface has two magnets housed in its interior through its lower surface, such that said magnets match with said handle's magnets to ensure the joining of said handle with said cooking surface,
- said cooking surface is of natural permeable slate and has a totally flat cooking surface.

Figure 1 shows a perspective view of this first embodiment, in which the cooking plate 1 is coupled to the handle 2. Figure 2 shows these two members decoupled from each other, in a position prior to their coupling: the magnets 4a of said handle 2 face the magnets 4b of said cooking plate. In this figure, said magnets 4a, 4b are represented with a broken line, since they are hidden from the upper oblique viewpoint of the figure.

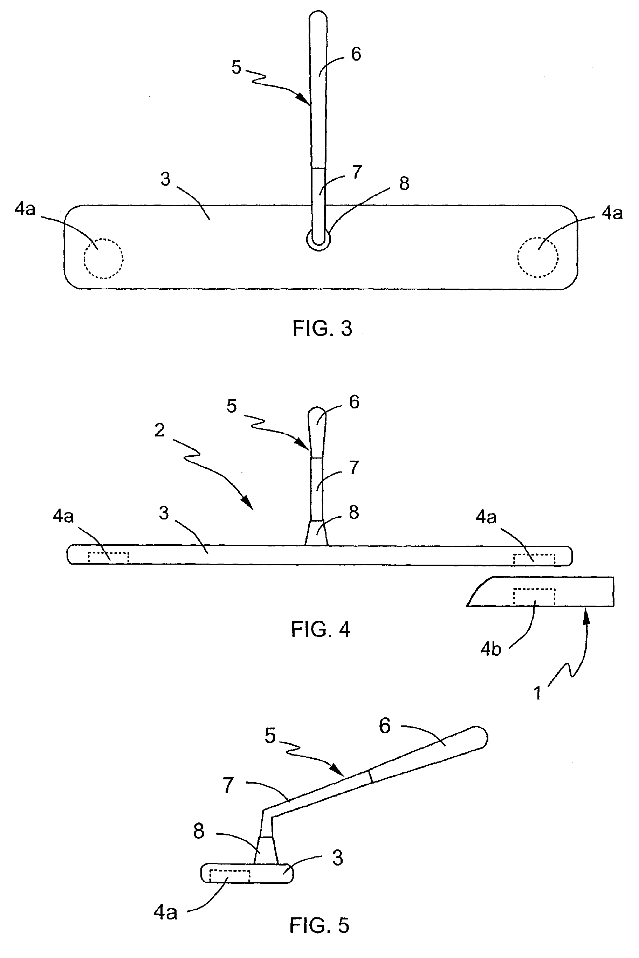

The cooking plate 1 has a rectangular shape, with rounded edges, and a relatively slight thickness which, depending on the total dimensions of the plate, is however sufficient to ensure its mechanical strength when loaded and sustained by said handle. Its upper surface or cooking surface is totally flat. The two magnets 4b are housed through the lower surface of said cooking plate 1, and as such are not visible from said upper surface. With the aim of easing the positioning of said handle 2 with respect to said cooking plate 1 for its coupling, said upper surface can have some markings or drawings, not represented, which indicate the position of said magnets. Said magnets 4b, which constitute the points at which said plate 1 is joined with said handle 2, are identical, have a cylindrical pill shape and are situated adjacent to one of the edges of said plate, parallel to said edge, near its corners. As can be seen in figure 4, said magnets 4b are housed in cylindrical bores made in the lower surface of said cooking plate 1. The lower surface of said cooking plate 1 is totally flat, except as concerns the bores which house said magnets 4b, such that it is suitable for use on any support, and especially on electric or vitroceramic kitchen hotplates.

As shown in figures 3, 4 and 5, the handle 2 comprises a bearing surface 3 joined to a haft 5 which has a joining end-member 8 of cone frustum shape, prolonged by an elbowed arm 7 which is hollow and has a circular section which in turn is prolonged at its end by a hand piece 6. Preferably, said bearing surface 3 and the members of said haft are made of metallic material, and the hand piece of thermal isolating material, such as wood or Bakelite. The haft 5 is joined to the bearing surface 3 by any suitable means, e.g. by welding. In the embodiment shown in said figures, the bearing surface is flat, with an elongated rectangular shape and rounded edges. Its greater side, in the ends of which are situated the two magnets 4a, has a length which is slightly shorter that that of the corresponding cooking plate 1. As can be seen in figures 4 and 5, said magnets 4a are identical, have a cylindrical pill shape and are housed in cylindrical bores made in the lower face of said bearing surface 3, such that the lower face of said magnets 4a is substantially in the same plane as the lower surface of said bearing surface 3, and the line which passes through said magnets 4a is substantially separated, horizontally, from the axis of the joining end-member 8 with said bearing surface 3.

Said magnets 4a, 4b can be fixed to said cooking plate 1 or to said bearing surface 3 of said handle 2 by any suitable means, such as for example high temperature resistant gluing. Likewise, by means of such gluing, using for example an appropriate mastic, the problem of the thermo-mechanic stresses induced by differential expansion as concerns the magnets and the material which houses them can be solved.

Additionally, said magnets 4a, 4b are such that the force of magnetic attraction which they exercise between them, through the thickness of the cooking plate 1 which remains between the magnets 4b and the cooking surface, is sufficient to ensure the support of said plate 1 when it is loaded and is lifted by means of said handle 2.

Furthermore, the manoeuvre for decoupling said handle 2 with respect to said plate 1 is performed with said plate 1 being in repose on a supporting surface, such as e.g. a grill, and by exerting through said hand piece 6 a lever force such that a moment is transmitted which rotates the bearing surface 3 on its longer side in proximity to the magnets 4a, decoupling them from the magnets 4b of said cooking plate 1. Said decoupling manoeuvre can only be performed with ease when said plate 1 is supported by a surface, as indicated. Consequently, when said plate 1 is lifted by means of said handle 2, it is solidly joined to the latter by the magnetic force of the magnets, and cannot be detached except by a very brusque accelerative movement which is normally not produced in conventional use of said kitchen utensil.

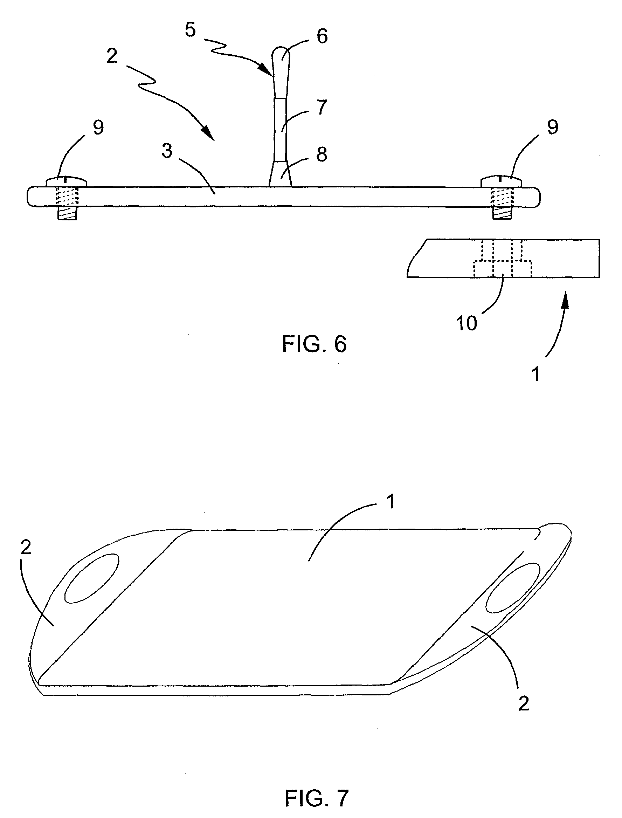

Figure 6, shows a second embodiment similar to that of figures 1 to 5, but in which the removable fixation system by means of magnets has been replaced by a removable joining system by means of screws and screw nuts. Consequently, the bearing surface 3 has two through holes for two screws 9 and the cooking plate 1 has corresponding embedded screw nuts 10.

Figure 7, shows a different embodiment of the invention. In this case, the cooking plate 1 has two handles 2 integrated which are made from the same material as the cooking plate 1 and the three members form a single physical member. This embodiment is particularly cheap to manufacture, and can be designed to be particularly easy to clean, i.e., without sharp angles nor inaccessible corners.

Several materials can be used for production of the cooking plate 1, as indicated above. Thus, for example, a metallic material can be used. There are several manufacturing processes that allow porous metallic materials to be obtained, such materials being for example sintered metals. However, the materials used are advantageously ceramic materials. A specific example of a suitable material is a powder which contains more than 95% in weight of silicocarbide, and the following grading:
- grains having a size less than 50 microns: 45% in weight,
- grains having a size of between 50 and 150 microns: 15% in weight,
- grains having a size of between 150 and 1000 microns: 25% in weight,
- grains having a size of between 1 and 3 mm: 15% in weight.

Bulk density is 2.60 kg/dm³ and porosity is 22% in volume.

An expert in the art will readily understand that the embodiments of the invention described above constitute no more than non-limitative examples, with respect to which numerous variants could be provided within the scope of the invention. Such variants could refer, particularly, to the shape or the composition of the cooking plate 1 and of the handle 2. Thus, for example, said plate 1 can have a plan which is rectangular, as in the embodiments illustrated, but could also be of oval or round shape or have any other shape in plan. Likewise, said plate 1 can have drawings or peripheral slots in its cooking surface, for aesthetic reasons or for possible drainage of liquids. Furthermore, said plate 1 need not be homogenous; in particular, should the plate be ceramic, it could be reinforced interiorly with compound material to improve its thermo-mechanic properties. Magnets 4a and 4b can have other shapes than that of a cylindrical pill, and there may be more than two. Finally, said cooking plate 1 magnets 4b can be housed through the upper cooking surface instead of being housed through the lower surface as in the first embodiment represented. As concerns the handle 2, its shape can differ from that of the embodiments represented. For example, the bearing surface 3 can be arched, with flat bases to house the magnets or the screws, and the haft can be replaced by a different handle, such as for example a grip, as long as the ease and safety of the decoupling manoeuvre, such as described, is ensured should the removable join between said plate 1 and said handle 2 be by means of magnets. Additionally, several handles 2 can be provided in one and the same cooking plate 1.

## Claims

1. Kitchen utensil for direct cooking of meats, fish, seafood and/or vegetables, which has at least one handle (2), **characterised in that** it has a porous cooking plate (1) and **in that** it is suitable for being placed on any heat source, in which said porous cooking plate (1) has pores which allow the absorption of liquids but which prevent the passage of flames.

2. Kitchen utensil according to claim 1, **characterised in that** said porous cooking plate (1) has a foam structure which retains the liquids exuded by foods such as meat, fish, seafood and/or vegetables during cooking.

3. Kitchen utensil according to one of claims 1 or 2, **characterised in that** it has a totally flat lower surface.

4. Kitchen utensil according to any of claims 1 to 3, **characterised in that** said cooking plate (1) is of a natural stone-like material.

5. Kitchen utensil according to claim 4, **characterised in that** said cooking plate (1) is of natural permeable slate.

6. Kitchen utensil according to any of claims 1 to 3, **characterised in that** said cooking plate (1) is of a ceramic material.

7. Kitchen utensil according to any of claims 1 to 6, **characterised in that** said handle (2) is joined to said cooking plate removably.

8. Kitchen utensil according to claim 7, **characterised in that** said handle (2) is joined to said cooking plate (1) by means of at least one magnet (4a, 4b).

9. Kitchen utensil according to claim 8, **characterised in that** said handle (2) has a bearing surface (3) with at least two magnets (4a) aligned with respect to each other, defining a line of magnetisation, and **in that** said handle (2) has a haft (5) which is joined to said bearing surface at a point distanced from said line of magnetisation.

10. Kitchen utensil according to one of claims 8 or 9, **characterised in that** said magnet (4a) is housed in the interior of said handle (2) through the lower surface of said handle (2) which enters in contact with said cooking plate (1).

11. Kitchen utensil according to any of claims 1 to 10, **characterised in that** said magnet (4b) is housed in the interior of said cooking plate (1) through the lower surface of such.

12. Kitchen utensil according to any of claims 1 to 11, **characterised in that** said porous cooking plate (1) has a porosity of between 10% and 30% in volume, preferably between 20% and 25% in volume.

13. Kitchen utensil according to any of claims 1 to 12, **characterised in that** said porous cooking plate (1) is formed by more than 50% in weight of silicocarbide (CSi), preferably by more than 90% in weight of silicocarbide.

14. Kitchen utensil according to any of claims 1 to 13, **characterised in that** said porous cooking plate (1) is formed from a granulated material which has the following grading:
- grains having a size less than 50 microns: between 40% and 50% in weight,
- grains having a size of between 50 and 150 microns: between 10% and 20% in weight,
- grains having a size of between 150 and 1000 microns: between 20% and 30% in weight,
- grains having a size of between 1 and 3 mm: between 10% and 20% in weight.

15. Kitchen utensil according to any of claims 1 to 14, **characterised in that** said porous cooking plate (1) and said at least one handle (2) are formed from the same material and are integrated with respect to one another forming a single physical member.

16. Use of a porous cooking plate (1) for direct cooking of foods such as meats, fish and seafood.

17. Use of a porous cooking plate (1) for manufacture of a kitchen utensil with a handle.
